# EUROPEAN PATENT APPLICATION

(11) **EP 2 518 659 A1**
(43) Date of publication of application: **31.10.2012**
(21) Application number: 09852529.8
(22) Date of filing: 22.12.2009
(51) Int. Cl.: G06F 21/20

(54) **USER AUTHENTICATION METHOD, USER AUTHENTICATION SYSTEM, AND PORTABLE COMMUNICATIONS TERMINAL**

(71) Applicant: Suginaka, Junko, Minato-ku, Tokyo 105-0001 (JP); Yasuda, Hiroshi, Yokohama-shi, Kanagawa 247-0008 (JP)
(72) Inventor: FURUKAWA Yoshihisa, Tokyo 102-0094 (JP); SUGINAKA, Junko, Tokyo 105-0001 (JP)
(74) Representative: Müller - Hoffmann & Partner
(86) International application number: PCT/JP2009/071277
(87) International publication number: WO 2011/077512

(57) **Abstract**

A personal authentication system includes a terminal (1) enabled to perform a predetermined information processing process, a USB memory (2) enabled to perform near field communication with a cell phone (6) having an e-mail function through Bluetooth, and an authentication server (4). When the USB memory (2) is loaded onto the terminal (1), USBID is read, and then transmitted from the terminal (1) to the authentication server (4). The authentication server (4) authenticates the USBID, and transmits an authentication key corresponding to the USBID to the corresponding cell phone (6) if the USBID is authentic. The cell phone (6) transmits the authentication key to the USB memory (2) via Bluetooth. The received authentication key is transmitted from the terminal (1) to the authentication server (4) via the USB memory (2). The authentication server (4) performs personal authentication by comparing the transmitted authentication key with the received authentication key to check for identification.

## Description

### Technical Field

The present invention relates to an authentication technique that authenticates the legitimacy of a person using an information processing terminal connected to a network.

### Background Art

With rapid advances in communication networks including the Internet, services including a variety of business transactions are performed on a terminal via the communication networks today. Similarly, services such as administrative procedures at administrative organizations are performed via the communication networks. On the occasion of the practice of such services, there is a lot of private information including settlement information and transaction details in information transmitted or received via the network.
Identify fraud is mounting accordingly. For example, a person enters a server or a database using some other person's identity, browses private information, steals information, or tampers information. Performing personal authentication to authenticate whether a person using a terminal is the person himself becomes important.

A technique based on biometric information is known as one of personal authentication techniques performed by a certification authority over the network. Patent Literature 1 describes an authentication technique that uses present location and authentication time and date resulting from using a clock circuit and a GPS receiver in addition to finger print data of a terminal user. Patent Literature 1 also describes that information identifying a biological object, such as iris or vein, is usable in addition to finger print. Also, Patent Literature 2 describes a network system that allows a personal computer (hereinafter referred to as PC) at a remote location to perform a transaction over the network. More in detail according to Patent Literature 2, on the occasion of business, when a password is transmitted in an e-mail from a center server to a cell phone of a user, the user inputs the password in a password input box on the PC using keys while viewing the received password. The input information is transmitted to the center server, and is then checked against the original password in personal authentication (paragraph numbers 500 - 502). In this way, the user is permitted to perform procedure operation, log-in operation, and transaction process safely on a PC other than a PC held by the user. Furthermore, Patent Literature 2 describes that the user is permitted to return a mail received by the cell phone to the center server (paragraph number 503).

### Citation List

### Patent Literature

[Patent Literature 1] Japanese Unexamined Patent Application Publication No. 2009-104248
[Patent Literature 2] Japanese Unexamined Patent Application Publication No. 2008-33571

### Summary of Invention

### Technical Problem

The authentication technique described in Patent Literature 1 is excellent in that finger print as information unique to each individual is used. On the other hand, the finger print is forged easily, and it is extremely difficult to determine whether finger print data as an authentication target is forged or not. The network system described in Patent Literature 2 forces a user to perform a password input operation substantially identical to an operation of related art, i.e., forces the user to perform an input operation while viewing a screen of a cell phone. In other words, it is likely that someone around the user looks the password. It is also possible that the password is wirelessly intercepted and used in an unauthorized fashion. Furthermore, the technique described in Patent Literature 2 is not perfect because once the password input operation has been successfully completed, the PC may be freely used in an unauthorized fashion. In the embodiment described in Patent Literature 2 where the user returns to the center server the password received by the cell phone, the physical location of the user cannot be checked against the physical location of the PC. The embodiment may not guarantee that the user and the PC are at the same location. The technique described in Patent Literature 2 is thus subject to some limitation.

The object of the present invention is to provide a personal authentication method, a personal authentication system, and a portable-type communication terminal for use in the personal authentication system that effectively prevents an unscrupulous evasive operation in an authentication process. The personal authentication system prevents the unscrupulous evasive operation by authenticating a portable-type storage medium performing a predetermined information processing process in a loaded state on an information processing terminal, and by performing personal authentication via the portable-type storage medium.

### Solution to Problem

A personal authentication system of the present invention verifies the presence or absence of an authorized user of a portable-type storage medium. The personal authentication system permits a predetermined information processing process to be executed if the portable-type storage medium is loaded on an information processing terminal connected to a network. The personal authentication system includes an authentication server that is connected to the network and authenticates the authorized user. The portable-type storage medium includes an identification information storage unit that stores identification information, and a first near field communication unit that performs near field communication with a portable-type communication terminal held by the authorized user, and enabled to transmit and receive information via an information transmission system including a radio base station. The authentication server includes a related information storage unit that stores, in a mapped fashion, the identification information of the portable-type storage medium, electronic address information of the portable-type communication terminal held by the authorized user of the portable-type storage medium, and unique authentication key information. The information processing terminal includes authentication request processing means that detects loading of the portable-type storage medium, retrieves the identification information, and transmits a signal including the retrieved identification information to the authentication server, and authentication key relay processing means that retrieves authentication key information from the authentication server via the portable-type communication terminal and the portable-type storage medium subsequent to the transmission of the signal including the identification information, and transmits the retrieved authentication key information to the authentication server. The authentication server includes authentication key information processing means that reads, from the related information storage unit, the authentication key information and the electronic address information, corresponding to the identification information included in the received signal including the identification information, and transmits the read authentication key information to an address indicated by the read electronic address information, and first determining means that, if the authentication key information has been received via the information processing terminal subsequent to the transmission of the authentication key information to the address indicated by the electronic address information, determines whether the received authentication key information is identical to the authentication key information transmitted by the authentication key information processing means.

The present invention relates to a personal authentication method of a personal authentication system for verifying the presence or absence of an authorized user of a portable-type storage medium. The personal authentication system permits a predetermined information processing process to be executed if the portable-type storage medium is loaded on an information processing terminal connected to a network. The personal authentication system includes an authentication server that is connected to the network and authenticates the authorized user. The personal authentication method includes storing in a related information storage unit in the authentication server, in a mapped fashion, the identification information of the portable-type storage medium, electronic address information of the portable-type communication terminal held by the authorized user of the portable-type storage medium, and unique authentication key information, with authentication request processing means in the information processing terminal, detecting loading of the portable-type storage medium, retrieving the identification information stored on the portable-type storage medium, and transmitting a signal including the retrieved identification information to the authentication server, with authentication key information processing means in the authentication server, reading from the related information storage unit the authentication key information and the electronic address information, corresponding to the identification information included in the received signal including the identification information, and transmitting the read authentication key information to an address indicated by the read electronic address information, with a near field communication unit in the portable-type storage medium, retrieving the authentication key information via a portable-type communication terminal held by the authorized user and enabled to transmit and receive information via an information transmission system including a radio base station, with authentication key relay processing means in the information processing terminal, retrieving authentication key information from the authentication server via the portable-type communication terminal and the portable-type storage medium subsequent to the transmission of the signal including the identification information, and transmitting the retrieved authentication key information to the authentication server, and with determining means in the authentication server, if the authentication key information has been received via the information processing terminal subsequent to the transmission of the authentication key information to the address indicated by the electronic address information, determining whether the received authentication key information is identical to the authentication key information transmitted by the authentication key information processing means.

According to the invention, the predetermined information processing process becomes executable via the network if it is verified in authentication that the portable-type storage medium loaded on the information processing terminal is held by the authorized user. The authentication server that authenticates that the user is the authorized user is connected to the network. The related information storage unit in the authentication server stores, in a mapped fashion, the identification information of the portable-type storage medium, the electronic address information (such as an e-mail address) of the portable-type communication terminal held by the authorized user of the portable-type storage medium, and the unique authentication key information. The authentication request processing means in the information processing terminal detects the loading of the portable-type storage medium, retrieves the identification information stored on the portable-type storage medium, and transmits to signal including the retrieved identification information to the authentication server. Next, the authentication key information processing means in the authentication server reads, from the related information storage unit, the authentication key information and the electronic address information, corresponding to the identification information included in the received signal including the identification information, and transmits the read authentication key information to an address indicated by the read electronic address information. Next, the near field communication unit in the portable-type storage medium retrieves the authentication key information via a portable-type communication terminal held by the authorized user, and enabled to transmit and receive information via the information transmission system (such as a public telephone line) including a radio base station. Next, the authentication key relay processing means in the information processing terminal retrieves the authentication key information from the authentication server via the portable-type communication terminal and the portable-type storage medium subsequent to the transmission of the signal including the identification information, and transmits the retrieved authentication key information to the authentication server. Next, if the authentication key information has been received via the information processing terminal subsequent to the transmission of the authentication key information to the address indicated by the electronic address information, the determining means in the authentication server determines whether the received authentication key information is identical to the authentication key information transmitted by the authentication key information processing means.

The terminal user is given (or lent) the portable-type storage medium and the personal authorization can be performed using the portable-type storage medium and the portable-type communication terminal held by the terminal user. More specifically, on condition that the authentication server has verified the authenticity of the portable-type storage medium loaded on the terminal, the authentication key information is transmitted, for example, in an e-mail, from the authentication server to the portable-type communication terminal, and is then transmitted from the portable-type communication terminal to the portable-type storage medium loaded on the terminal in near field communication, and is then transmitted from the terminal having the portable-type storage medium loaded thereon to the authentication server via the network. The authentication server checks the transmitted authentication key against the received authentication key, thereby performing the personal authentication. For example, if the authentication key transmitted in the e-mail is transmitted from the portable-type communication terminal to the portable-type storage medium in the near field communication, the terminal users are verified that the terminal users have both their own portable-type storage medium and their own portable-type communication terminal. An unscrupulous evasive operation in the authentication process is systematically and reliably prevented even if a stolen portable-type storage medium is used.

The portable-type communication terminal of the present invention is the portable-type communication terminal used in the personal authentication system and includes a second near field communication unit that performs near field communication with the first near field communication unit, and near field communication control means that transmits received authentication key information from the second near field communication unit to the first near field communication unit upon receiving the authentication key information from the authentication server.

According to the invention, the portable-type communication terminal includes the second near field communication unit, and transmits the authentication key to the portable-type storage medium. An unscrupulous evasive operation in the authentication process is systematically and reliably prevented even if a stolen portable-type storage medium is used.

### Advantageous Effects of Invention

According to the present invention, the short-range communication performed between the portable-type communication terminal and the portable-type storage medium effectively prevents an unscrupulous evasive operation in the authentication process.

### Brief Description of Drawings

FIG. 1 diagrammatically illustrates a network system to which a personal authentication system of the present invention is applied.
FIG. 2 is a block diagram illustrating functions of terminal 1, USB memory 2, authentication server 4, mail system 5, and cell phone 6.
FIG. 3 is a sequence chart diagrammatically illustrating an information flow related to personal authentication performed among the USB memory 2, the terminal 1, the authentication server 4, and the cell phone 6.
FIG. 4 is a flowchart illustrating an example of a USB port state detection process to be executed by a CPU of the terminal 1.
FIG. 5 is a flowchart illustrating an example of an authentication process I to be executed by a CPU of the authentication server 4.
FIG. 6 is a flowchart illustrating an example of an authentication process II to be executed by the CPU Of the authentication server 4.
FIG. 7 is a flowchart illustrating an example of an authentication key generation process to be executed by the CPU of the authentication server 4.
FIG. 8 is a flowchart illustrating an example of a process I to be executed by a CPU of the cell phone 6.
FIG. 9 is a flowchart illustrating an example of a USB process I to be executed by the CPU of the terminal 1.
FIG. 10 is a flowchart illustrating an example of a USB process II to be executed by the CPU of the terminal 1.
FIG. 11 is a flowchart illustrating an example of a process II to be executed by the CPU of the cell phone 6.

### Description of Embodiments

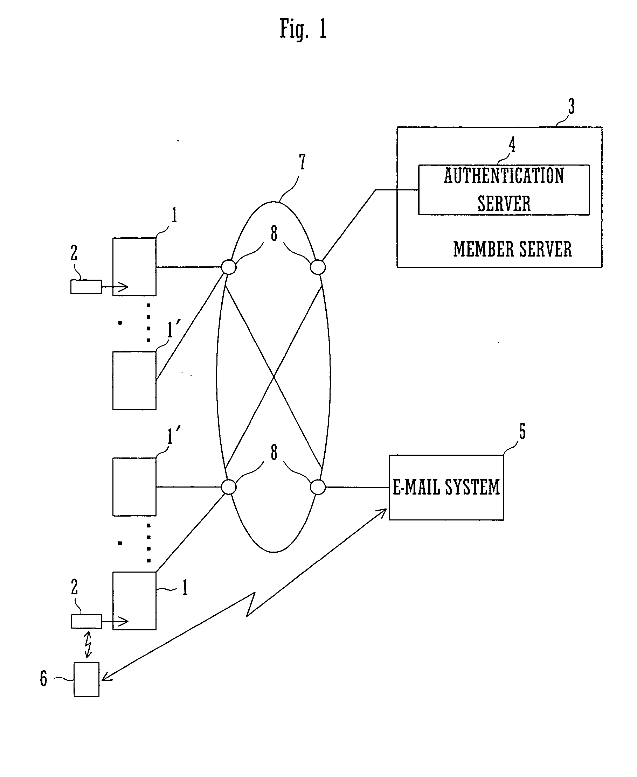

FIG. 1 diagrammatically illustrates a network system to which a personal authentication system of the present invention is applied. The network system of FIG. 1 includes terminals (information processing terminals) 1 arranged for members, including consumers, stores, companies, and further one or a plurality of banking institutions that make settlement, and a member server 3 installed at an administering organization that manages and stores information of each terminal 1 and among terminals 1 in a package fashion. The terminal 1 and the member server 3 are connected to a network 7 such as the Internet.

The terminal 1 is typically a personal computer having a CPU (Central Processing Unit). The terminal 1 stores a program file (referred to as a general AP (application program)) and a program file (referred to as a particular AP). The general AP creates, processes, and stores information using a typical software program for producing a document and drawings, and performs a typical process, such as transmitting and receiving information using a communication software program. The particular AP performs a process related to execution of a particular application software program to be discussed below. More specifically, installed as the particular AP on the terminal 1 of each of the consumer, the store, and the company is a software program that produces and communicates documents related to buying or selling of products and services, asking for cost estimate of and billing charge for products and services, and payment and money received. Also, a software program for an authentication process to be discussed later is installed on the terminal 1 as the particular AP. More specifically, the terminal 1 settles typical business transactions, for example, issues a bill from a store, receives a bill from a store, issues an instruction sheet to transfer money from a buyer to an account of an banking institution of a bill issuer (i.e., payment), issues a receipt of the money, and performs a transmission and reception process in a variety of digital documents of a business transaction regardless of whether the business transaction is performed in electronic settlement. The terminal 1 can produce a variety of documents in an electronic file in text format or binary format. The electronic files may be transmitted or received among the terminals 1 via the member server 3, for example. Installed on the terminal 1 of each banking institution is a particular application software program that performs a settlement instruction process (an instruction to perform a settlement process between the banking institutions and the like) in accordance with a banking settlement document from the terminal 1 of the consumer or the company.

The terminal 1 has a USB port that permits a portable storage medium (member external storage medium) such as a chip-like USB (Universal Serial Bus) memory 2 to be loaded thereon (connected thereto). The storage medium may be a stick-like hardware element complying with an IEEE1394 port. The USB memory 2 is given a member, and has a storage unit (section) that stores predetermined information as described below. The USB memory 2 also includes near field communication means, such as Bluetooth, in an appropriate location inside a chip-like main body thereof. The near field communication means is not limited to wireless (radiowave, and light), but a wireless type is preferable in view of operability. The near field communication means is not limited to Bluetooth, and may be wireless LAN (Local Area Network), RFID (Radio Frequency Identification), or the like.

The member server 3 stores appropriate information related to a member, for example, member information such as the name, alias, mail address, and address of a member. The member server 3 may further include a storage unit storing a file transmission and reception history of each file, and a file type for management. The member server 3 has a function as an authentication server 4. The authentication server 4 is connected to the network 7, and is ready to allow a file, i.e., a packet, transmitted or received between the member server 3 and the terminal 1 to be viewed. The member server 3 and the authentication server 4 may be connected in series or in parallel. Either connection is acceptable as long as a packet transmitted from the terminal 1 to the member server 3 is viewable within a range where the authentication process of the present invention is embodied.

The system may find other applications. For example, the system may be applied to information communications between a plurality of terminals 1 connected to a LAN in an organization as a public institution that creates, stores and manages secret information, and also may be applied to information communications and a management system between the organization and a terminal external to the organization. Issuance of a certificate is contemplated as information communications with the terminal external to the organization, for example.

As illustrated in FIG. 1, the terminal 1 is connected to the network 7 via a provider (ISP) 8. A plurality of the terminals 1 are typically connected to the ISP 8. Moreover, servers of an appropriate number, each having a Web site providing a variety of information, are also connected to the ISP 8, although not illustrated in FIG. 1. The terminals 1 connected to the ISP 8 include a terminal 1 having the particular AP installed thereon and an ordinary terminal 1' having no particular AP installed thereon. Part of the particular AP includes a program performing the authentication process, and permits or prohibits the execution of the particular AP and manages permit/prohibit of the particular AP in accordance with authentication results.

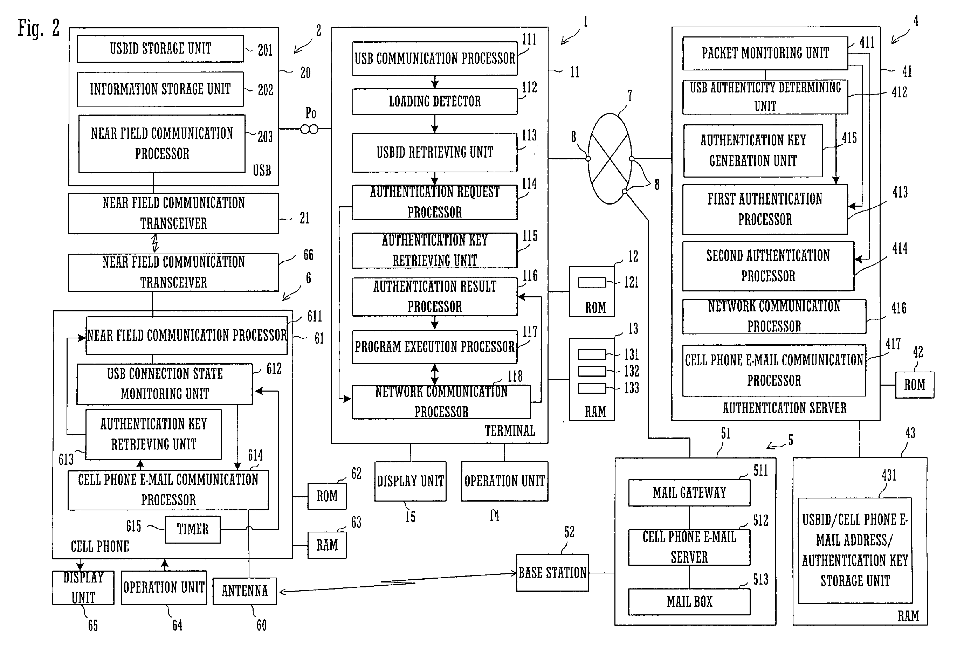

In the network system, a portable-type communication terminal, typically, a portable-type cell phone 6 enabled to transmit and receive an e-mail is used for the authenticity, i.e., the identity of a member who uses the USB memory 2. A mail system 5 of a cell phone company serves as a mechanism to transmit or receive an e-mail. The configuration of each of the mail system 5 and the cell phone 6 is described with reference to FIG. 2. The portable-type cell phone 6 may be a PDA (Personal Digital Assistant) in place of a cell phone 6.

FIG. 2 is a functional block diagram of the terminal 1, the USB memory 2, the authentication server 4, the mail system 5, and the cell phone 6. As illustrated in FIG. 2, the terminal 1 includes a controller 11 including a CPU. The controller 11 is connected to a ROM (Read Only Memory) 12 and a RAM (Random Access Memory) 13. The controller 11 is connected to an operation unit 14 including numeric keys, and a mouse, and a display unit 15 including a CRT, a liquid-crystal display, or a plasma display, each displaying an image.

The ROM 12 includes at least a storage unit 121 for OS and the like. The storage unit 121 for OS and the like stores an OS (Operating System) executing startup of the terminal 1 (boot operation), and the reading of the application software program, BIOS (Basic Input/Output System), and the like.

The RAM 13 includes, at least, general AP storage unit 131, particular AP storage unit 132, and produced file storage unit 133. The general AP storage unit 131 stores the general application software program installed thereon. The particular AP storage unit 132 stores the particular application software program installed thereon and related to the process of the electronic commercial transaction services, the administrative services, and the like described above. The produced file storage unit 133 stores a text file or a binary code file, produced in accordance with the general application software program and the particular application software program. The files stored on the produced file storage unit 133 include a file produced thereby, and files transmitted or received. The particular AP is retrieved via an external storage medium in advance or at a specific time point. For example, during a membership registration, the particular AP may be installed from a predetermined server over the network (the member server 3 for example), or an external storage medium such as a hard disk.

When the controller 11 performs a program stored on the ROM 12 and the RAM 13, the controller 11 functions as USB communication processor 111, loading detector 112, USBID retrieving unit 113, authentication request processor 114, authentication key retrieving unit 115, authentication result processor 116, program execution processor 117, and network communication processor 118. The USB communication processor 111 communicates with the USB memory 2. The loading detector 112 detects whether the USB memory 2 is loaded on a USB port Po of the terminal 1. The USBID retrieving unit 113 retrieves from the USB memory 2 identification information (USBID) identifying the USB memory 2. The authentication request processor 114 transmits an authentication request signal to the authentication server 4. The authentication key retrieving unit 115 retrieves authentication key information from the USB memory 2. The authentication result processor 116 retrieves information of an authentication result from the authentication server 4, and performs a process responsive to the authentication result. The program execution processor 117 executes a general AP and a particular AP as a specified program. The network communication processor 118 transmits a document file to or receives a document file from the member server 3 and the authentication server 4 via the network 7, typically in a packet formed in accordance with TCP/IP (transmission control protocol / internet protocol) specifications. Moreover, the network communication processor 118 returns a received packet to an original document file, and converts a transmission file into a packet before transmitting the transmission file. Each transmitted packet file includes on the header thereof a global IP address of the terminal 1 as a transmission source, and a global IP address of each of another terminal and the member server 3 as a transmission destination. The header of the transmitted packet further includes a USBID of a USB memory loaded on the terminal 1, and at least an authentication key used in a first round of authentication.

The USB memory 2 includes a module 20 storing information, and a near field communication transceiver 21. The module 20 storing information includes a USBID storage unit 201 and an information storage unit 202. The USBID storage unit 201 stores a USBID identifying the USB memory 2. The information storage unit 202 stores information used in a session process to be discussed later (also referred to as information identifying person "passkey: PIN (Personal Identification Number"), and information received in the session. The near field communication transceiver 21 includes an electromagnetic wave antenna for Bluetooth or the like, and performs near field communication via Bluetooth with the cell phone 6 as described below. With the USB memory 2 loaded on the terminal 1, a near field communication processor 203 receives a specific signal from the terminal 1 or receives a specific program from the terminal 1. The near field communication processor 203 thus controls the operation of the near field communication transceiver 21, and the operation of the session.

The loading detector 112 of the terminal 1 detects the presence or absence of a loaded USB memory 2 by referring to the presence or absence of a response signal from the USB port Po in a predetermined handshake process. With the USB memory 2 loaded on the terminal 1, the USBID retrieving unit 113 reads and retrieves the USBID from the USBID storage unit 201. With the USB memory 2 loaded on the terminal 1, the authentication request processor 114 generates an authentication request signal including the USBID, converts the authentication request signal into a packet, and then transmits the packet to the authentication server 4.

Upon retrieving information of an authentication key from the USB memory 2 subsequent to the transmission of the authentication request signal, the authentication key retrieving unit 115 converts the authentication key into a predetermined packet, and then transmits the packet to the authentication server 4. The authentication result processor 116 receives the authentication result transmitted from the authentication server 4, and permits the program execution processor 117 to perform only a particular AP if the authentication result indicates a success. If the authentication result does not indicate a success (indicates a failure), the authentication result processor 116 outputs to the program execution processor 117 a signal that permits the program execution processor 117 to perform only a general AP. As described below, the authentication server 4 continuously performs the authentication process while file transmission or file reception is performed between the terminal 1 and the member server 3 through the execution of the particular AP (more specifically, transmission of a document file to or reception of a document file from another terminal 1 via the member server 3).

The authentication server 4 includes controller 41 having a CPU, ROM 42 storing the authentication processing program, and RAM 43 storing authentication information. The RAM 43 includes the USBID of the USB memory 2 given each member, an e-mail address of the cell phone 6 held by each member, and USBID/cell phone e-mail address/authentication key (hereinafter referred to as related information) 431.

When the controller 41 executes a program stored on the ROM 42, the controller 41 functions as packet monitoring unit 411, USB authenticity determining unit 412, first authentication processor 413, second authentication processor 414, authentication key generation unit 415, network communication processor 416, and cell phone e-mail communication processor 417. The packet monitoring unit 411 reads the USBID and the authentication key from within the packet transmitted from the terminal 1. The USB authenticity determining unit 412 determines the authenticity of the read USBID. The first authentication processor 413 transmits the authentication key corresponding to the USBID determined to be authentic to a corresponding cell phone e-mail address in an e-mail, and then checks the transmitted authentication key against the authentication key received from the terminal 1 as a transmission source of the USBID determined to be authentic (first round of authentication). The second authentication processor 414 checks the USBID included in the received packet against the USBID retrieved at the first round of authentication each time the packet is received subsequent to the first round. The authentication key generation unit 415 modifies the authentication key at a predetermined timing. The network communication processor 416 transmits a document file to or receives a document file from the terminal 1 via the network 7, typically in a packet defined by the TCP/IP protocol. The cell phone e-mail communication processor 417 converts the authentication key information into an e-mail packet and then transmits the e-mail packet to the cell phone 6 (via the mail system 5 of the cell phone company). The cell phone e-mail communication processor 417 functions as a socalled mail server, and converts a transmission mail into an Internet mail format before transmitting the transmission mail.

The USB authenticity determining unit 412 checks the read USBID against a list of the USBIDs as source information pre-stored on the related information storage unit 431. If a matched USBID is found, the USB memory 2 is determined to be authentic. If a matched USBID is not found, the USB authenticity determining unit 412 determines that the USB memory 2 is not authentic, without performing the authentication process of the authentication key. Information indicating authentication failure is returned to the terminal 1 having the USB memory 2 mounted thereon, and subsequent communication is shut off.

According to the embodiment, the authentication process is continuously performed while the USB memory 2 is loaded on the terminal 1. More specifically, if the USBID transmitted from the terminal 1 is authentic, the authentication key transmitted to the corresponding cell phone 6 is received via the cell phone 6, the USB memory 2, and the terminal 1. The first authentication processor 413 checks the two authentication keys against each other. If the two authentication keys match each other, the first authentication processor 413 returns information of an authentication success to the terminal 1. On the other hand, if the two authentication keys are checked against each other and determined to be unmatched, the first authentication processor 413 returns information that authentication has been unsuccessful (authentication failure) to the terminal 1. The information of authentication failure may be counted by an unillustrated internal counter, and used as a guidance in which the user is allowed to re-try the USB memory 2 by a predetermined number of times (operation to re-load the USB memory 2). The first authentication processor 413 is responsible for the first authentication round.

If the authentication success results from the first authentication round, the second authentication processor 414 temporarily stores at an appropriate location in the RAM 43 the first authentication result. While the file transmission or file reception, i.e., the packet transmission or packet reception is performed with the terminal 1 later, the second authentication processor 414 checks the USBID included in the header within the packet received from the terminal 1 against the USBID retrieved at the first authentication round. If the two USBIDs match each other, the second authentication processor 414 determines that the second or later authentication has been successful, and allows communication to continue. If the two USBIDs become unmatched at the second or later authentication round, the second authentication processor 414 shuts off communication with the terminal 1 upon determining that the USB memory 2 is re-loaded in the middle of the operation, or that any other unscrupulous action is taken.

The authentication key generation unit 415 modifies only the authentication key out of information corresponding to the USBID in a period from the end of a specific process performed by a member with the USB memory 2 loaded on the terminal 1 to the next loading of the USB memory 2. The authentication key may be modified when the USB memory 2 is loaded on the terminal 1 and the USBID is read. Even after the reading of the USBID with the USB memory 2 loaded on the terminal 1, it is acceptable if the authentication key is modified at least before the USB memory 2 is loaded on one of the terminals 1 next time. The modification of the authentication key is preferably performed in a random fashion, for example, using a random number generator. The modification of the authentication key is performed by rewriting the current authentication key corresponding to the USBID of the related information storage unit 431.

The mail system 5 functions as a information transmission system, and is connected to the network 7 via ISP 8. The mail system 5 includes an information processor 51, and wireless base stations 52 of a specific number. The base station 52 includes an antenna, and is a transceiver that transmits a radio wave to and receives a radio wave from the cell phone 6. Mail systems 5 of a specific number may be installed to distribute load. Similarly, base stations of a specific number may be installed to extend a communication coverage area.

The information processor 51 includes mail gateway 511, cell phone e-mail server 512, and mail box 513. The mail gateway 511 performs a conversion operation between a format and protocol of an e-mail transmitted and received by the cell phone 6 and a format and protocol of an e-mail transmitted and received by the authentication server 4 over the Internet. The cell phone e-mail server 512 controls transmission and reception of the e-mail. The mail box 513 temporarily stores an e-mail transmitted or received.

The cell phone 6 includes an antenna 60 mounted on the main body thereof, and a controller 61 including a CPU provided inside of the main body. The controller 61 is connected to a ROM 62 and a RAM 63. The ROM 62 stores a variety of control programs for a standard telephone communication process, a transmission and reception process of the e-mail, a near-range session process for the personal authentication, an authentication key reception process, a session result reporting process, and the like. The RAM 63 stores information including transmission and reception information as information to be processed, an e-mail address of the authentication server, the passkey identifying the corresponding USB memory 2 and other information. Also provided on an appropriate location on the surface of the main body of the cell phone 6 are an operation unit 64 and a display unit 65. The operation unit 64 includes numeric keys and a variety of function keys. The display unit 65 includes a liquid-crystal panel displaying process information and reception information. The near field communication transceiver 66 includes an electromagnetic wave transmission and reception antenna of Bluetooth, and performs Bluetooth near field communication with the USB memory 2 as described below.

A controller 61 performs the control program stored on the ROM 62. The controller 61 includes near field communication processor 611 controlling the operation of the near field communication transceiver 66 and controlling the session operation, USB connection state monitoring unit 612, authentication key retrieving unit 613, cell phone e-mail communication processor 614, and timer 615.

Upon receiving the authentication key transmitted from the authentication server 4, the near field communication processor 611 transmits a signal to perform a predetermined session with the USB memory 2, and starts the session if a response signal is received in response to the transmitted signal. Furthermore, the near field communication processor 611 transmits the authentication key and then transmits or receives signals for sessions continually. The near field communication processor 611 and the near field communication processor 203 continue the session until the USB memory 2 is unloaded from the terminal 1 if the cell phone 6 and the USB memory 2 are within a near range of communication coverage, for example, within 1 m (meter). In optical communication, optical elements need to be positioned within a specific range with the emission and reception faces thereof facing each other.

When the predetermined session is performed with the near field communication processor 203 of the USB memory 2, the USB connection state monitoring unit 612 determines whether the cell phone 6 is present in the vicinity of the USB memory 2 loaded on the terminal 1, i.e., present in the vicinity of the terminal 1. More specifically, if no session occurs with the near field communication transceiver 21, the USB connection state monitoring unit 612 determines that no cell phone 6 is present in the vicinity of the terminal 1. If the session is interrupted in the middle thereof, the USB connection state monitoring unit 612 determines that the cell phone 6 moves away from the terminal 1 in the middle of the session. In each case, the USB connection state monitoring unit 612 results in faulty ending. On the other hand, if the session ends in response to the unloading of the USB memory 2 from the terminal, the USB connection state monitoring unit 612 determines that the cell phone 6 remains in the vicinity of the terminal 1 until the last moment, and does not result in faulty ending. If the session does not start or is interrupted in the middle thereof, the cell phone 6 transmits to the authentication server 4 a signal indicating an authentication failure. The USB connection state monitoring unit 612 monitors (determines) the continuity of the session, by time counting a specific time interval ranging from tens of seconds to one minute with the timer 615.

The authentication key retrieving unit 613 receives the authentication key transmitted from the authentication server 4 via the mail system 5, and transfers the received authentication key to the near field communication processor 611. The cell phone e-mail communication processor 614 transmits to or receives from the authentication server 4, information of the authentication key, information indicating a session failure, and the like in the form of an e-mail.

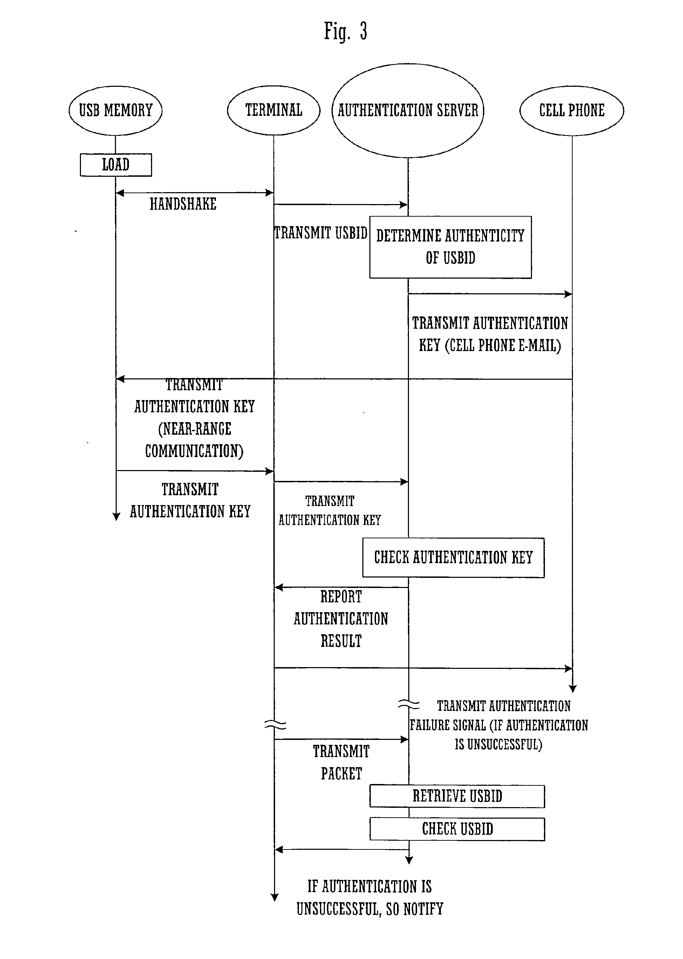

FIG. 3 is a sequence chart diagrammatically illustrating an information flow related to personal authentication performed among the USB memory 2, the terminal 1, the authentication server 4, and the cell phone 6.

A member holding their own USB memory 2 and cell phone 6 may now file an application for something, or perform a business transaction at the terminal 1 at home or at the terminal 1 of someone else or installed at a store, or public facilities.

The member loads their own USB memory 2 on the USB port Po of the terminal 1. In response to the loading, the handshake process is executed between the terminal 1 and the USB memory 2. Next, the USBID is read from the USB memory 2 onto the terminal 1. The terminal 1 generates the authentication request signal including the retrieved USBID, converts the authentication request signal into the transmission packet, and then transmits the transmission packet to the authentication server 4. In this way, the first round of the authentication process starts. The authentication server 4 checks the authenticity of the USBID. The authentication server 4 transmits to the corresponding cell phone 6 the received authentication key corresponding to the USBID in the e-mail if the USBID is authentic. The cell phone 6 transmits the received authentication key to the USB memory 2 via near field communication. The authentication key received by the USB memory 2 is transmitted to the authentication server via the terminal 1. The authentication server 4 then checks the authentication key transmitted to the cell phone 6 against the authentication key received from the terminal 1. If the two authentication keys match each other, the authentication server 4 determines that authentication has been successfully completed. If the two authentication keys fail to match, the authentication server 4 determines that authentication has not been successfully completed. The authentication result is transmitted to the terminal 1. If the authentication result is an authentication failure, the information of the authentication failure is transmitted to the cell phone 6 via the USB memory 2. In this way, the near field communication is shut off. Also, the member is eligible to retry.

If the first round of the authentication process proves successful, a specific file is thereafter converted into a packet, and the packet is transmitted or received between the terminal 1 and the authentication server 4 (more specifically, between the terminal 1 and the member server 3 via the authentication server 4). The USBID of the USB memory 2 written on the header of the packet transmitted from the terminal 1 to the authentication server 4 may be thereafter included. Then, the second and later round of the authentication process may be continually performed, while the USB memory 2 remains loaded on the terminal 1.

More specifically, the authentication server 4 monitors header information of the packet transmitted from the terminal 1, and extracts the USBID from the header information. The authentication server 4 then checks the USBID against the USBID retrieved from the terminal 1 at the first round of the authentication process. If authentication has been unsuccessfully completed, the information of the authentication failure is transmitted to the terminal 1. Moreover, the process of the particular AP initiated by the success of the first round of the authentication process includes document creation besides communication, but the second and later round of the authentication process is suspended between processes other than packet transmission and reception operations. Even during the suspension period, a packet for authentication including the USBID may be generated at regular intervals or periodically, and transmitted to the authentication server 4 in one example.

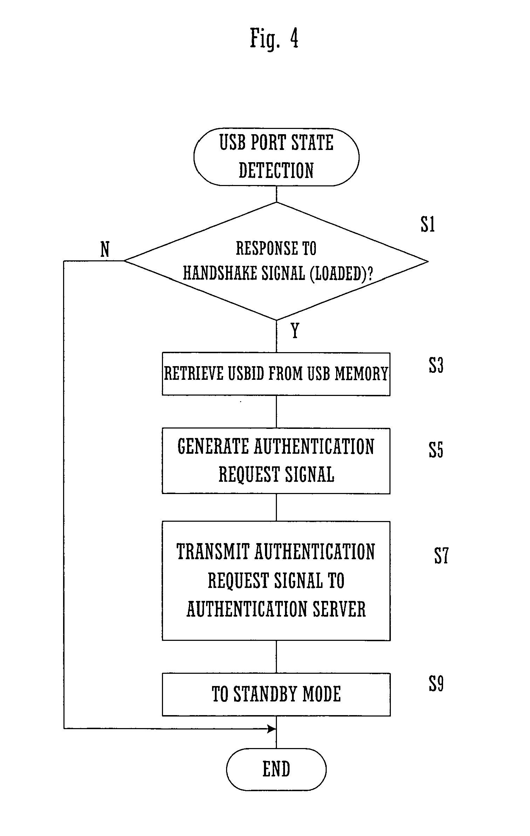

FIG. 4 is a flowchart illustrating an example of a USB port state detection process to be executed by the CPU of the terminal 1. The terminal 1 transmits the handshake signal to the USB port Po periodically, and determines the state of the USB port Po (step S1). If the USB memory 2 is loaded on the USB port Po at this point of time, a response signal is returned in response to the handshake signal. If the USB memory 2 is not loaded, no response signal is returned. The terminal 1 exits the process. Next, if the response signal is returned, the terminal 1 starts a given exclusive AP of the particular APs based on the premise that one chip including the USB memory 2 is loaded. The exclusive AP determines whether the loaded chip is the USB memory 2 and starts a communication application software program executing a read process to read internal information.

If the terminal 1 receives a response from the USB memory 2 in step S1, the terminal 1 reads the USBID from the USBID storage unit 201 (step S3). If the USBID is retrieved, the terminal 1 generates the authentication request signal (packet) including the USBID (step S5). In succession, the terminal 1 transmits the generated authentication request signal to the authentication server 4 (step S7). When the authentication request signal is transmitted, the terminal 1 transitions into a standby mode to wait for the reception of the packet from the authentication server 4 (step S9).

Optionally, the USB port state detection process may be performed the general AP in place of the particular AP. The process may be transferred to the particular AP after the detection of the chip loading on the USB port Po.

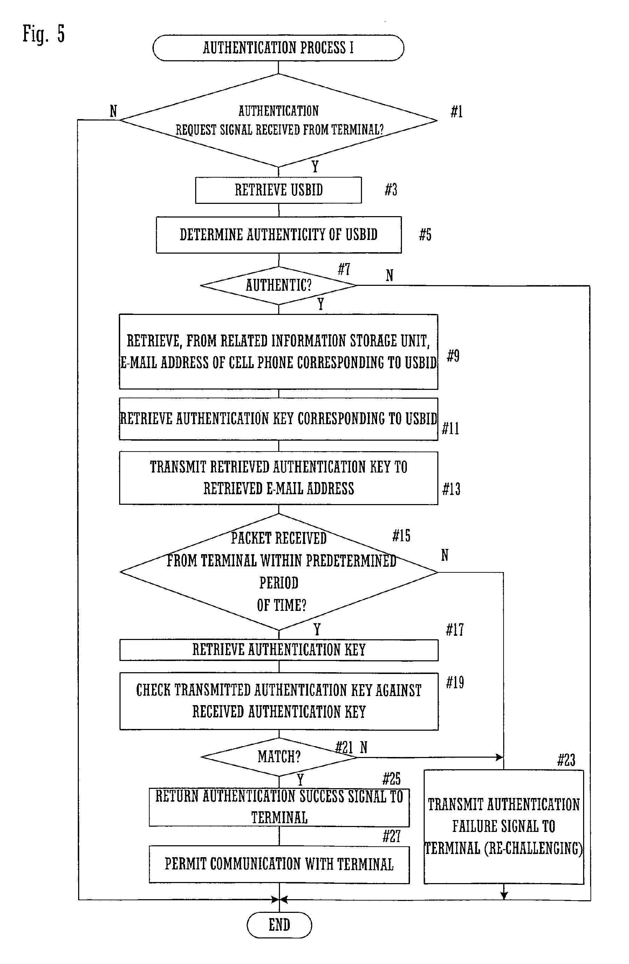

FIG. 5 is a flowchart illustrating an example of an authentication process I to be executed by the CPU of the authentication server 4. The authentication process I is the first round of the authentication process.

The authentication server 4 determines whether the authentication request signal has been received from the terminal 1 (step #1). If no authentication request signal has been received, the authentication server 4 exits the process. If the authentication request signal has been received on the other hand, the authentication server 4 reads the USBID from within the packet (step #3). Next, the authentication server 4 searches the USBID list of the related information storage unit 431 as to whether information identical to the read USBID is present, and thus determines the authenticity of the USBID (step #5). If the information identical to the USBID is present in the list, the authentication server 4 determines that the USBID is authentic (Y in step #7). On other hand, the information identical to the USBID is not present in the list, the authentication server 4 determines that the USBID is not authentic (N in step #7), and exits the process.

If the authentication server 4 determines that the USBID is authentic, the authentication server 4 retrieves from the related information storage unit 431 an e-mail address of the cell phone 6 corresponding to the USBID determined to be authentic (step #9), and further retrieves the authentication key corresponding to the USBID (step #11). The cell phone e-mail communication processor 417 in the authentication server 4 transmits the retrieved authentication key to the retrieved e-mail address (step #13).

Next, the authentication server 4 determines whether a packet is received from the terminal 1 within a specific period of time (step #15). The specific period of time has a length of time that is set to be slightly longer than a period of time taken for the information of the authentication key output from the authentication server 4 in step #13 to return to the authentication server 4 via the cell phone 6, the USB memory 2, and the terminal 1. The specific period of time is time counted by an unillustrated timer in the controller 11. If the authentication key is retrieved (from the terminal 1 as a transmission source of the authentication key) within the specific period of time (step #17), the authentication server 4 checks the authentication key transmitted in step #13 against the authentication key received in step #15 (step #19) to see whether the two keys are identical.

If the transmitted key and the received key fail to match each other (N in step #21), an authentication failure signal is returned to the terminal 1 (step #23). The authentication failure signal is used to prompt the authentication process to be performed by a specific number of times. More specifically, a member views the authentication failure signal displayed on the display unit 15 of the terminal 1 to check whether the USB memory 2 is authentic or not, and is thus prompted to re-load the terminal 1 onto the USB port Po. The specific number of times results from counting the authentication failure signal and is then compared with a set number of times in terms of magnitude.

If the transmitted authentication key and the received authentication key match each other in step #21, an authentication success signal is transmitted to the terminal 1 (step #25). The authentication server 4 permits communication to be performed with the terminal 1 (step #27).

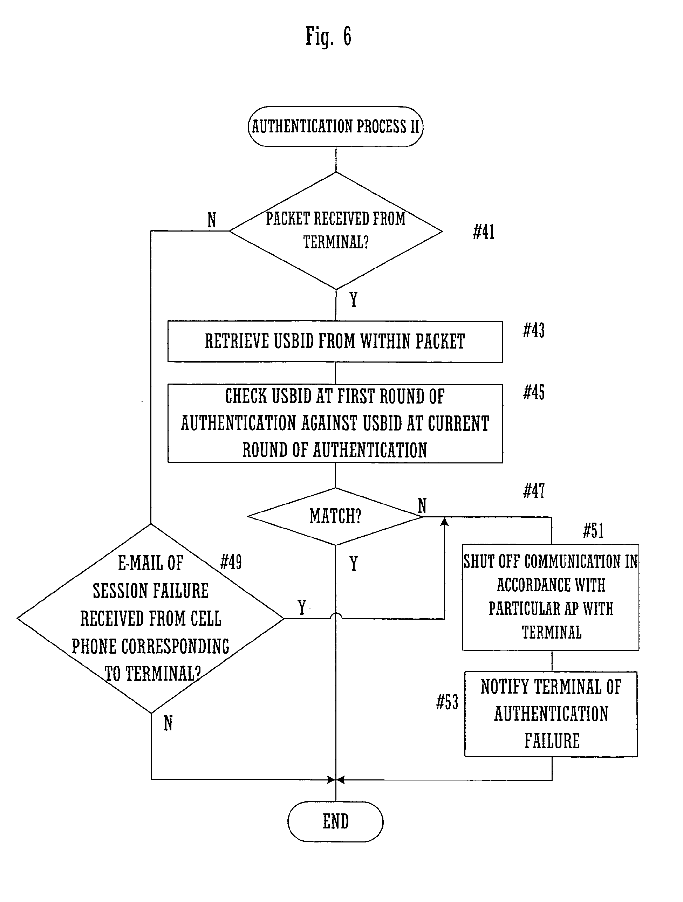

FIG. 6 is a flowchart illustrating an example of an authentication process II to be executed by the CPU Of the authentication server 4. The authentication process II refers to a second or later round of authentication process. If the first round of authentication process is successful, the USBID at this point of time is mapped to the terminal 1 (IP address) and then stored at an appropriate location on the RAM 43 of the authentication server 4. The particular AP is executed, and a specific packet can be transmitted or received between the terminal 1 and the authentication server 4 (more specifically, the member server 3). The authentication server 4 determines in response to the IP address of the terminal 1 whether the packet transmitted from the terminal 1 has been received (step #41).

If the packet has been received in step #41, the authentication server 4 reads the USBID from the header of the packet (step #43). The authentication server 4 checks the USBID determined in the authenticity determination at the first round of authentication of the terminal 1 (referred to a first USBID) against the USBID read from the current packet to determine whether the two USBIDs match each other (step #45). If the first USBID matches the current USBID, the authentication server 4 determines that authentication has been successfully completed, and then exits the process. If the first USBID fails to match the current USBID, the authentication server 4 shuts off the communication by the particular AP with the terminal 1 (step #51), and transmits the authentication failure signal to the terminal 1 (step #53).

If no packet is received from the terminal 1 in step #41, the authentication server 4 determines whether an e-mail indicating a session failure has been received from the cell phone 6 corresponding to the terminal 1 (step #49). If the e-mail indicating the session failure has not been received, the authentication server 4 exits the process. Conversely, if the e-mail indicating the session failure has been received, processing proceeds to step #51.

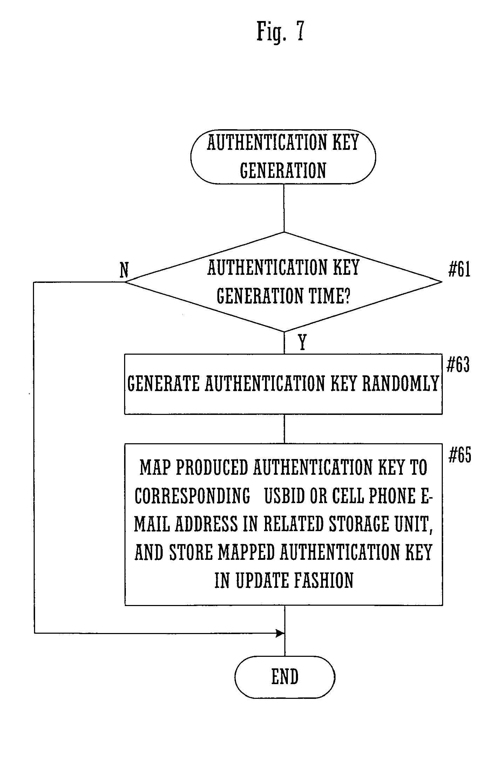

FIG. 7 is a flowchart illustrating an example of an authentication key generation process to be executed by the CPU of the authentication server 4. The authentication server 4 first determines whether it is an authentication key generation time (step #61). The authentication key generation time refers to a point of time predetermined between the unloading of the USB memory 2 from the previous terminal 1 followed by the loading of the USB memory 2 to the current terminal 1 (whether the current terminal 1 and the previous terminal 1 are different or not is not important) and the unloading of the USB memory 2 from the current terminal 1. For example, the authentication key generation time may be a point of time when the authentication server 4 receives a first USBID from the terminal 1 or when the USB memory 2 is unloaded from the terminal 1.

If it is not the authentication key generation time, the authentication server 4 exits the process. On the other hand, if it is the authentication key generation time, the authentication key is randomly generated (step #63). Next, the authentication server 4 maps the generated authentication key to the corresponding USBID or the cell phone e-mail address in the related information storage unit 431 before storing the authentication key on the related information storage unit 431 in an update fashion (step #65). As a one-time password, the authentication key is randomly modified in this way each time. Therefore, the authentication key, if intercepted, is rendered useless in an attempt to use next time.

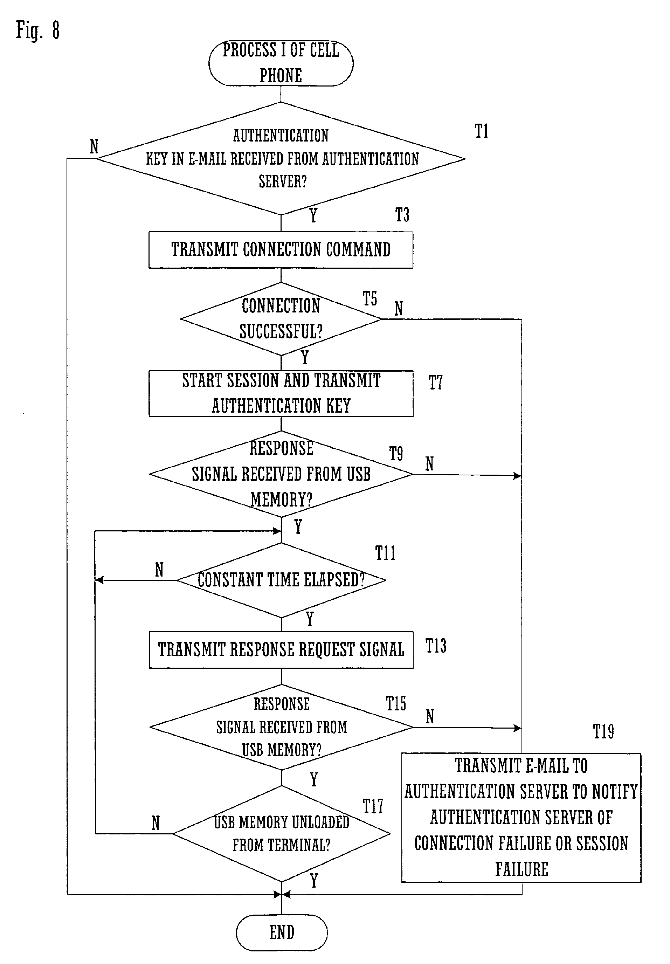

FIG. 8 is a flowchart illustrating an example of a process I to be executed by a CPU of the cell phone 6. The cell phone 6 first determines whether the cell phone 6 has received the authentication key in an e-mail from the authentication server 4 (step T1). If the authentication key has not been received, the cell phone 6 exits the process. On the other hand, if the authentication key has been received, the cell phone 6 transmits a connection command to the USB memory 2 having the passkey prior to the session with the USB memory 2 (step T3). More in detail, the cell phone 6 stores an e-mail address of the authentication server 4, and automatically transitions into a transmission process of the connection command of the session if predetermined information, i.e., the information of the authentication key, is received from the e-mail address. Instead of the automatic transition into the session, instruction information instructing a holder of the cell phone 6 to operate a session start via the near field communication may be transmitted.

Also, the RAM 63 of the cell phone 6 pre-stores a passkey identifying the corresponding USB memory 2 through a pairing process. The pairing process is a pre-process of the session. In the pairing process, the cell phone 6 and the USB memory 2 in a mapped relationship are paired by specific information, such as a passkey.

Next, the cell phone 6 determines whether the connection has been successful (step T5). If the connection has been successful, the session is to be performed. For example, the connection is performed using the information of the passkey by using GAP (Generic Access Profile) as a profile for connection / authentication / encryption of device. If the connection is established, data transfer is performed using FTP (File Transfer Profile) as a profile for data transfer.

Next, the session process starts as described above. The authentication key is transmitted to the USB memory 2 as a pairing destination (step T7). In succession, the cell phone 6 determines whether a response signal has been received from the USB memory 2 (step T9). If the response signal has been received, the cell phone 6 determines whether a preset constant period of time (a length of time as long as tens of seconds to one minute) has elapsed (step T11). If the constant period of time has elapsed, the cell phone 6 transmits a response request signal (step T13). In succession, the cell phone 6 determines whether a response signal has been received from the USB memory 2 (step T15). If the response signal has been received, the cell phone 6 determines whether the USB memory 2 is unloaded from the terminal 1, for example, by referring to the presence or absence of a signal indicating the unloading (step T17). If the USB memory 2 is unloaded from the terminal 1, the cell phone 6 ends the process. On the other hand, if the USB memory 2 is not unloaded from the terminal 1, processing returns to step T11.

If the pairing partner is not found in step T5, and no response signals have been received in steps T9 and T15, the cell phone 6 determines that the person who loads the USB memory 2 does not hold the cell phone 6, or that the cell phone 6 is away from the USB memory 2 by a predetermined distance or longer. The cell phone 6 thus transmits to the authentication server 4 a session failure signal in an e-mail indicating a connection failure at the session start or an interruption in the middle of the session (step T19).

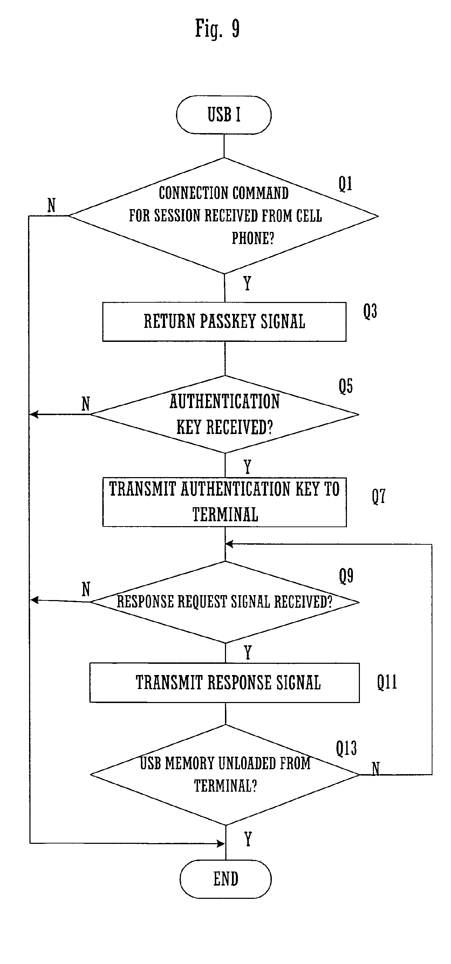

FIG. 9 is a flowchart illustrating an example of a USB process I to be executed by the CPU of the terminal 1. The USB process I and USB process II to be discussed below may be performed in a configuration where the USB memory 2 includes a CPU and process programs of the USB processes I and II are stored on the information storage unit 202.

The terminal 1 determines whether a signal for the session, i.e., the connection command has been received from the cell phone 6 (step Q1). If the command has not been received, the terminal 1 exits the process. On the other hand, if the command has been received, the terminal 1 returns the passkey as a response signal (step Q3). In succession, the terminal 1 determines the presence or absence of a received authentication key (step Q5). If no authentication key has been received, the terminal 1 exits the process. On the other hand, if the authentication key has been received, the received authentication key is transmitted to the terminal 1 (step Q7).

In succession, the terminal 1 determines whether a response request signal for the session has been received from the cell phone 6. If no such signal has been received, the terminal 1 exits the process. On the other hand, if the response request signal has been received, the terminal 1 transmits a response signal (step Q11). In succession, the terminal 1 determines whether the USB memory 2 is unloaded from the terminal 1 (step Q13). If the USB memory 2 remains loaded, processing returns to step Q9 to determine the presence or absence of the received response request signal. In this way, the session continues until the USB memory 2 is unloaded from the terminal 1.

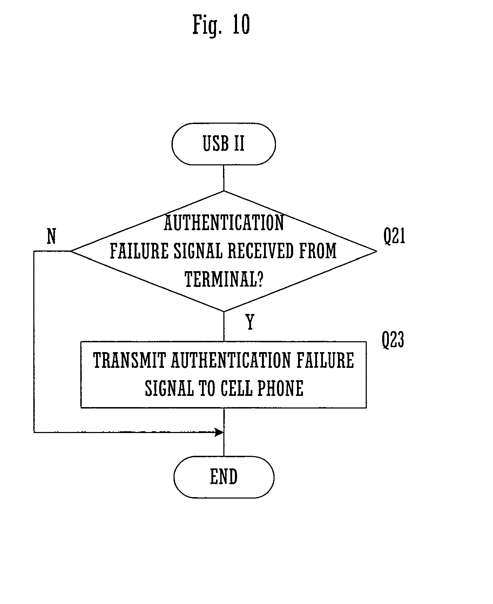

FIG. 10 is a flowchart illustrating an example of the USB process II to be executed by the CPU of the terminal 1. First, the CPU determine whether an authentication failure signal has been received from the terminal 1 (step Q21). If no authentication failure signal has been received from the terminal 1, the terminal 1 exits the process. On the other hand, if the authentication failure signal has been received from the terminal 1, the terminal 1 transmits to the cell phone 6 an authentication failure signal responsive to that signal (step Q23).

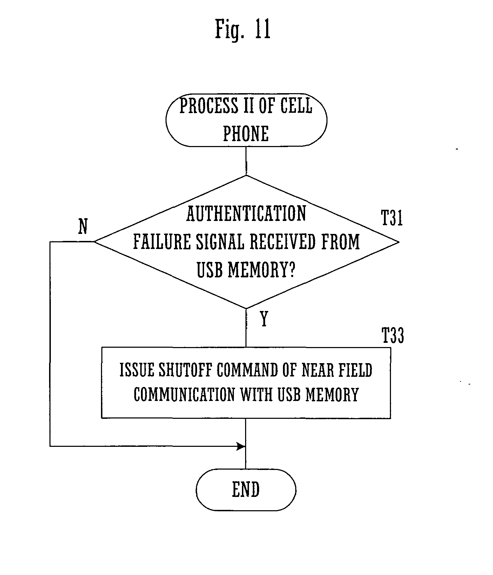

FIG. 11 is a flowchart illustrating a process II to be executed by the CPU of the cell phone 6. First, the cell phone 6 determines whether an authentication failure signal has been received from the USB memory 2 (step T31). If no authentication failure signal has been received, the cell phone 6 exits the process. On the other hand, if the authentication failure signal has been received, the cell phone 6 issues a shutoff command of the near field communication with the USB memory 2 (step T33). The shutoff command shuts off the near field communication between the cell phone 6 as a session partner and the USB memory 2.

The present invention may be embodied in the following examples.

(1) In a preferable example, the particular application software program to be stored on the particular AP storage unit 132 is stored on the member server 3 or the like, and downloaded from the member server 3 for installation. In this way, the particular AP to be installed onto the terminal 1 is executed in a manner isolated from the general AP.

(2) In one example, the USB memory 2 may include a secondary battery as a power source therewithin, or may be operated from power supplied by a power source in the terminal 1 with the USB memory 2 loaded on (connected to) the terminal 1.

(3) In response to an authentication failure determination in the identification of the authentication key, the authentication server 4 may transmit the authentication failure signal to the terminal to prohibit the operation itself of the particular AP of the terminal 1 in one example, or in response to the authentication failure signal, the authentication server 4 may prohibit the transmission of the packet to or the reception of the packet from the terminal 1 in another example.

(4) In the embodiment, the authentication server 4 transmits the e-mail to the cell phone 6 corresponding to the authentication key (step #13) upon determining that the USBID received from the terminal 1 is authentic (step #7). The following example may be contemplated. For example, an application program provides an application service such as i appli (registered trademark) between the cell phone 6 supporting an i mode (registered trademark) and a predetermined server (the authentication server 4) over a network (information transmission system). Such a program may be downloaded (as necessary) from the authentication server 4 or another predetermined site, and predetermined information is thus transmitted or received. The program executing the application service uses a wait-on-standby function and transmits to the authentication server 4 an authentication key transmission request signal with a predetermined period of several seconds to tens of seconds. The program then receives an authentication key transmitted from the authentication server 4 in response to the authentication key transmission request signal (on condition that the USBID has been received). On the other hand, the authentication server 4 includes an information transceiver unit supporting a service of the i appli (registered trademark). Upon receiving the authentication key transmission request signal from the cell phone 6, the information transceiver transmits the authentication key to an electronic address of the cell phone 6 in response to the signal. In this example, the related information storage unit 431 stores, in a mapped state, the information of the USBID / the electronic address of the cell phone 6 / the authentication key. Also, the authentication server 4 may determine the authenticity of the electronic address of the cell phone 6 as the transmission source of the authentication key transmission request signal by checking the USBID against the USBID as the storage content of the related information storage unit 431.

The above described process may be specifically performed as described below. When the USB memory 2 is loaded on the terminal 1, the holder of the USB memory 2 performs a startup operation on the cell phone 6 into the mode of the predetermined i appli (registered trademark) (the startup operation is not needed if the cell phone 6 always remains in the mode). The authentication server 4 determines whether the USBID has been received, and performs the checking process to determine the authenticity as described above. If the USBID is authentic, the authentication server 4 transmits the authentication key to the cell phone 6 in response to the authentication key transmission request signal. The authentication server 4 transmits the authentication key once (on condition that the authentication key has normally been received). Upon receiving the authentication key, the cell phone 6 may change the mode into a sleep state for power saving purpose. In this way, the transmission and reception process of the authentication key may be performed using not only the e-mail but also another application service of the cell phone company.

As described above, the personal authentication system of the present invention verifies the presence or absence of an authorized user of a portable-type storage medium. The personal authentication system permits a predetermined information processing process to be executed if the portable-type storage medium is loaded on an information processing terminal connected to a network. Preferably, the personal authentication system includes an authentication server that is connected to the network and authenticates the authorized user. The portable-type storage medium includes an identification information storage unit that stores identification information, and a first near field communication unit that performs near field communication with a portable-type communication terminal held by the authorized user, and enabled to transmit and receive information via an information transmission system including a radio base station. The authentication server includes a related information storage unit that stores, in a mapped fashion, the identification information of the portable-type storage medium, electronic address information of the portable-type communication terminal held by the authorized user of the portable-type storage medium, and unique authentication key information. The information processing terminal includes authentication request processing means that detects loading of the portable-type storage medium, retrieves the identification information, and transmits a signal including the retrieved identification information to the authentication server, and authentication key relay processing means that retrieves authentication key information from the authentication server via the portable-type communication terminal and the portable-type storage medium subsequent to the transmission of the signal including the identification information, and transmits the retrieved authentication key information to the authentication server. The authentication server includes authentication key information processing means that reads from the related information storage unit, the authentication key information and the electronic address information, corresponding to the identification information included in the received signal including the identification information, and transmits the read authentication key information to an address indicated by the read electronic address information, and first determining means that, if the authentication key information has been received via the information processing terminal subsequent to the transmission of the authentication key information to the address indicated by the electronic address information, determines whether the received authentication key information is identical to the authentication key information transmitted by the authentication key information processing means.

With this arrangement, on condition that the authentication server has determined the authenticity of the portable-type storage medium loaded on the terminal, the authentication key information is transmitted, for example, in an e-mail, from the authentication server to the portable-type communication terminal, and is then transmitted from the portable-type communication terminal to the portable-type storage medium loaded on the terminal in near field communication, and is then transmitted from the terminal having the portable-type storage medium loaded thereon to the authentication server via the network. The authentication server checks the transmitted authentication key against the received authentication key, thereby performing the personal authentication. For example, if the authentication key transmitted in the e-mail is transmitted from the portable-type communication terminal to the portable-type storage medium via the near field communication, the terminal user proves to have both their own portable-type storage medium and their own portable-type communication terminal. An unscrupulous evasive operation in the authentication process is systematically and reliably prevented even if a stolen portable-type storage medium is used.

The authentication server preferably includes identification information match determining means that determines whether the identification information included in the received signal including the identification information matches the identification information pre-stored on the related information storage unit. Since this arrangement determines the authenticity of the portable-type storage medium, the portable-type storage medium is reliably authenticated.

The authentication server preferably includes determination result processing means that transmits the determination result to the information processing terminal as a transmission source of the authentication key. With this arrangement, if the determination result indicates an authentication failure, the information of the authentication failure is transmitted to the information processing terminal. The information processing terminal can respond to the authentication failure, for example, by prohibiting a transmission process of information to the authentication server.

The information processing terminal preferably includes loading monitoring means that monitors a loading state of the portable-type storage medium and stops communication if an unloaded state of the portable-type storage medium is detected. With this arrangement, while the information processing terminal performs a predetermined information processing process, the portable-type storage medium needs to be loaded on the information processing terminal because the loading of the medium is constantly monitored. This arrangement makes unauthorized use more difficult than the case in which successful authentication results if the portable-type storage medium is simply loaded at the first round of authentication.

Preferably, the information processing terminal is set to be ready to execute the predetermined information processing process while the portable-type storage medium is loaded, and the authentication server includes second determining means that monitors whether the signal including the identification information received from the information processing terminal is a first received signal, and determines whether the identification information included in a second or later signal matches the identification information included in the first received signal if the received signal is the second or later signal. With this arrangement, once the personal authentication is successful at the first round of authentication, the identification information only is checked at the second and later round of authentication. This arrangement eliminates the need to transfer the authentication key information in the e-mail via the portable-type communication terminal and the portable-type storage medium at each authentication round, and reduces interception opportunity.

The personal authentication system preferably includes authentication key information generating means that generates authentication key information that becomes different each time the authentication key information processing means transmits the authentication key information. With this arrangement, the authentication key information, if intercepted, becomes useless information when the information processing terminal is used next time. The authentication key information is thus prevented from being stolen.

The authentication key generating means preferably generates the authentication key information in a random fashion. With this arrangement, any modified information is not predictable from the intercepted authentication key information, and highly reliable authentication key information results.

Preferably, the portable-type communication terminal is a cell phone that transmits information to and receives information from the radio base station via an electromagnetic wave. With this arrangement, the present invention is highly versatile because cell phones are tools owned by a large number of users.

The first near field communication unit preferably includes a radio communication device that uses the electromagnetic wave. The electromagnetic wave is free from an adjustment characteristic of a light beam, for example, an alignment adjustment to align light transmission and reception faces of cell phones.

A portable-type communication terminal used as the portable-type communication terminal in the personal authentication system according to one of claims 1 through 8, preferably includes a second near field communication unit that performs near field communication with the first near field communication unit, and near field communication control means that transmits received authentication key information from the second near field communication unit to the first near field communication unit upon receiving the authentication key information from the authentication server. With this arrangement, the portable-type communication terminal includes the second near field communication unit and transmits the authentication key to the portable-type storage medium. This arrangement effectively prevents an unscrupulous evasive operation in an authentication process even if a stolen portable-type storage medium is used.

Preferably, the near field communication control means pre-stores a passkey identifying a corresponding portable-type storage medium, and transmits, in accordance with the passkey, the authentication key information received from the authentication server to the first near field communication unit of the corresponding portable-type storage medium. With this arrangement, even if a plurality of portable-type storage media are present around, the authentication key is transmitted to only one identified portable-type storage medium. A high level of secrecy is thus maintained.

The portable-type communication terminal preferably includes an address storage unit that stores the electronic address of the authentication server, and proximity communication monitoring means that monitors a near field communication state with the first near field communication unit and transmits, to the electronic address of the authentication server, information that notifies the authentication server of an interruption of near field communication if the near field communication is interrupted. With this arrangement, if the portable-type communication terminal and the portable-type storage medium get out of a near ranger and relatively far from each other, the authentication server is so notified. If the possibility that the user is an unauthorized user is high, a preventive step, such as prohibiting a predetermined information processing process, may be taken.

### Reference Signs List

- 1: Terminal (information processing terminal)
- 11: Controller
- 111: USB communication processor
- 112: Loading detector (loading monitoring means)
- 113: USBID retrieving unit
- 114: Authentication request processor (authentication request processing means)
- 115: Authentication key retrieving unit (authentication key relay processing means, count monitoring means)
- 116: Authentication result processor
- 117: Program execution processor
- 118: Network communication processor
- 132: Particular AP storage unit
- 2: USB memory (portable-type storage medium)
- 201: USBID storage unit (identification information storage unit)
- 202: Information storage unit
- 203: Near field communication processor (first near-range communication unit)
- 21: Near field communication transceiver (first near- range communication unit)
- 3: Member server
- 4: Authentication server
- 41: Controller
- 411: Packet monitoring unit
- 412: USB authenticity determining unit (identification information match determining means)
- 413: First authentication processor (first determining means, determination result processing means)
- 414: Second authentication processor (second determining means, determination result processing means)
- 415: Authentication key generation unit (authentication key information generating means)
- 416: Network communication processor
- 417: Cell phone e-mail communication processor (authentication key information processing means)
- 431: USBID/cell phone e-mail address/ authentication key storage unit (related information storage unit)
- 5: E-mail system (information transmission system)
- 6: Cell phone (portable-type communication terminal)
- 61: Controller
- 611: Near field communication processor (near-range communication control means)
- 612: USB connection state monitoring unit (proximity communication monitoring means)
- 613: Authentication key retrieving unit
- 614: Cell phone e-mail communication processor
- 615: Timer
- 63: RAM (address storage unit)
- 66: Near field communication transceiver (second near- range communication unit)
- 7: Network

## Claims

1. A personal authentication system for verifying the presence or absence of an authorized user of a portable-type storage medium, the personal authentication system permitting a predetermined information processing process to be executed if the portable-type storage medium is loaded on an information processing terminal connected to a network,
the personal authentication system comprising an authentication server that is connected to the network and authenticates the authorized user,
wherein the portable-type storage medium comprises
an identification information storage unit that stores identification information, and
a first near field communication unit that performs near field communication with a portable-type communication terminal held by the authorized user, and enabled to transmit and receive information via an information transmission system including a radio base station,
wherein the authentication server comprises
a related information storage unit that stores, in a mapped fashion, the identification information of the portable-type storage medium, electronic address information of the portable-type communication terminal held by the authorized user of the portable-type storage medium, and unique authentication key information,
wherein the information processing terminal comprises authentication request processing means that detects loading of the portable-type storage medium, retrieves the identification information, and transmits a signal including the retrieved identification information to the authentication server, and
authentication key relay processing means that retrieves authentication key information from the authentication server via the portable-type communication terminal and the portable-type storage medium subsequent to the transmission of the signal including the identification information, and transmits the retrieved authentication key information to the authentication server, and
wherein the authentication server comprises authentication key information processing means that reads, from the related information storage unit, the authentication key information and the electronic address information, corresponding to the identification information included in the received signal including the identification information, and transmits the read authentication key information to an address indicated by the read electronic address information, and
first determining means that, if the authentication key information has been received via the information processing terminal subsequent to the transmission of the authentication key information to the address indicated by the electronic address information, determines whether the received authentication key information is identical to the authentication key information transmitted by the authentication key information processing means.

2. The personal authentication system according to claim 1, wherein the authentication server comprises identification information match determining means that determines whether the identification information included in the received signal including the identification information matches the identification information pre-stored on the related information storage unit.

3. The personal authentication system according to one of claims 1 and 2, wherein the authentication server comprises determination result processing means that transmits the determination result to the information processing terminal as a transmission source of the authentication key.

4. The personal authentication system according to one of claims 1 through 3, wherein the information processing terminal comprises loading monitoring means that monitors a loading state of the portable-type storage medium and stops communication if an unloaded state of the portable-type storage medium is detected.

5. The personal authentication system according to one of claims 1 through 4, wherein the information processing terminal is set to be ready to execute the predetermined information processing process while the portable-type storage medium is loaded, and
wherein the authentication server comprises second determining means that monitors whether the signal including the identification information received from the information processing terminal is a first received signal, and determines whether the identification information included in a second or later signal matches the identification information included in the first received signal if the received signal is the second or later signal.

6. The personal authentication system according to one of claims 1 through 5, comprising authentication key information generating means that generates authentication key information that becomes different each time the authentication key information processing means transmits the authentication key information.

7. The personal authentication system according to claim 6, wherein the authentication key generating means generates the authentication key information in a random fashion.

8. The personal authentication system according to one of claims 1 through 7, wherein the portable-type communication terminal is a cell phone that transmits information to and receives information from the radio base station via an electromagnetic wave.

9. The personal authentication system according to claim 8, wherein the first near field communication unit comprises a radio communication device that uses the electromagnetic wave.

10. A portable-type communication terminal used as the portable-type communication terminal in the personal authentication system according to one of claims 1 through 9, comprising a second near field communication unit that performs near field communication with the first near field communication unit, and
near field communication control means that transmits received authentication key information from the second near field communication unit to the first near field communication unit upon receiving the authentication key information from the authentication server.

11. The portable-type communication terminal according to claim 10, wherein the near field communication control means pre-stores a passkey identifying a corresponding portable-type storage medium, and transmits, in accordance with the passkey, the authentication key information received from the authentication server to the first near field communication unit of the corresponding portable-type storage medium.

12. The portable-type communication terminal according to one of claims 10 and 11, comprising an address storage unit that stores the electronic address of the authentication server, and proximity communication monitoring means that monitors a near field communication state with the first near field communication unit and transmits, to the electronic address of the authentication server, information that notifies the authentication server of an interruption of near field communication if the near field communication is interrupted.

13. A personal authentication method of a personal authentication system for verifying the presence or absence of an authorized user of a portable-type storage medium, the personal authentication system permitting a predetermined information processing process to be executed if the portable-type storage medium is loaded on an information processing terminal connected to a network,
the personal authentication system comprising an authentication server that is connected to the network and authenticates the authorized user, the personal authentication method comprising
storing in a related information storage unit in the authentication server, in a mapped fashion, the identification information of the portable-type storage medium, electronic address information of the portable-type communication terminal held by the authorized user of the portable-type storage medium, and unique authentication key information,
with authentication request processing means in the information processing terminal, detecting loading of the portable-type storage medium, retrieving the identification information stored on the portable-type storage medium, and transmitting a signal including the retrieved identification information to the authentication server,
with authentication key information processing means in the authentication server, reading from the related information storage unit the authentication key information and the electronic address information, corresponding to the identification information included in the received signal including the identification information, and transmitting the read authentication key information to an address indicated by the read electronic address information,
with a near field communication unit in the portable-type storage medium, retrieving the authentication key information via a portable-type communication terminal held by the authorized user and enabled to transmit and receive information via an information transmission system including a radio base station,
with authentication key relay processing means in the information processing terminal, retrieving authentication key information from the authentication server via the portable-type communication terminal and the portable-type storage medium subsequent to the transmission of the signal including the identification information, and transmitting the retrieved authentication key information to the authentication server, and
with determining means in the authentication server, if the authentication key information has been received via the information processing terminal subsequent to the transmission of the authentication key information to the address indicated by the electronic address information, determining whether the received authentication key information is identical to the authentication key information transmitted by the authentication key information processing means.
